# EUROPÄISCHE PATENTSCHRIFT

(11) **EP 3 615 786 B1**
(45) Veröffentlichungstag und Bekanntmachung des Hinweises auf die Patenterteilung: **24.03.2021**
(21) Anmeldenummer: 18718434.6
(22) Anmeldetag: 17.04.2018
(51) Int. Cl.: F02M 26/10, F02M 26/21, F02M 26/64, F02M 26/70, F02M 26/35, F16K 11/044, F02M 35/10

(54) **REGELVORRICHTUNG FÜR EINE VERBRENNUNGSKRAFTMASCHINE**
CONTROL DEVICE FOR AN INTERNAL COMBUSTION ENGINE
DISPOSITIF DE RÉGULATION POUR UN MOTEUR À COMBUSTION INTERNE

(30) Priorität: 27.04.2017 DE 102017109066
(43) Veröffentlichungstag der Anmeldung: 04.03.2020
(73) Patentinhaber: Pierburg GmbH, 41460 Neuss (DE); Ford-Werke GmbH, 50735 Köln (DE)
(72) Erfinder: VIERKOTTEN, Dirk, 53804 Much (DE); FLENDER, Maximilian, 40477 Düsseldodrf (DE); KUSKE, Andreas, 6243 CM Geulle (NL); SOMMERHOFF, Franz Arnd, 52033 Aachen (DE); KEMMERLING, Jörg, 52156 Monschau (DE); SMILJANOVSKI, Vanco, 50181 Bedburg (DE); KINDL, Helmut, 52074 Aachen (DE); FRIEDERICHS, Hanno, 52072 Aachen (DE); VIGILD, Christian, 52457 Aldenhoven (DE)
(74) Vertreter: terpatent Patentanwälte ter Smitten Eberlein-Van Hoof Rütten Daubert
(86) Internationale Anmeldenummer: PCT/EP2018/059730
(87) Internationale Veröffentlichungsnummer: WO 2018/197258

(56) Entgegenhaltungen:
- DE-B4-102012 101 851
- DE-U1-202014 100 190
- DE-U1-202014 103 770

## Beschreibung

Die Erfindung betrifft eine Regelvorrichtung für eine Verbrennungskraftmaschine mit einem Ansaugkanal, einem Abgasrückführkanal, der in den Ansaugkanal mündet, einem Regelkörper, einem Mischgehäuse, in welchem der Ansaugkanal ausgebildet ist und welches im bezogen auf die Erdoberfläche unteren Bereich eine Mündung des Abgasrückführkanals aufweist, einer als Drehachse dienenden Welle, auf der der Regelkörper exzentrisch befestigt ist und die im Ansaugkanal stromaufwärts der Mündung des Abgasrückführkanals im Mischgehäuse gelagert ist, wobei der Regelkörper durch Drehung der Welle zwischen einer ersten Endstellung, in der der Regelkörper den Ansaugkanal zumindest drosselt und einer zweiten Endstellung, in der der Regelkörper den Abgasrückführkanal verschließt, bewegbar ist.

Regelvorrichtungen werden in Verbrennungskraftmaschinen genutzt, um Abgas- oder Luftmengen zu regeln, die abgeführt oder der Verbrennung zugeführt werden sollen. Auch Kombinationen dieser Regelventile, bei denen entweder ein sowohl einen Abgasrückführkanal als auch einen Ansaugkanal beherrschender Ventilkörper oder zwei gekoppelte Ventilkörper über eine gemeinsame Stellvorrichtung betätigt werden, sind bekannt. Entsprechend dienen diese Ventilkörper als Kombination eines Abgasrückführventils mit einer Drosselklappe. Bei diesen Ausführungen mündet der Abgasrückführkanal unmittelbar stromabwärts der als Drosselventil dienenden Klappe in den Luftansaugkanal. Bei gewünschter Erhöhung der Abgasrückführrate wird dann mit Öffnen des Abgasrückführventils in gleichem Maße die Drosselklappe geschlossen, was eine Erhöhung des Druckgefälles im Abgasrückführkanal zur Folge hat, wodurch der Anteil des Abgases im Vergleich zur angesaugten Luftmenge erhöht wird. Eine derartige Anordnung wird beispielsweise in der DE 27 03 687 A1 offenbart.

Aus der DE 10 2014 114 968 A1 ist ebenfalls eine Regelvorrichtung bekannt, bei der zwei parallel angeordnete Klappen über eine gemeinsame exzentrisch angeordnete Drehwelle betätigt werden, so dass mit Drehung der beiden Klappen sich die erste klappe vom Ventilsitz des Luftansaugkanals entfernt, während sich die zweite Klappe dem Ventilsitz des Abgasrückführkanals nähert, bis der Luftansaugkanal vollständig geöffnet ist und der Abgasrückführkanal vollständig verschlossen ist. Sowohl für die den Abgasrückführkanal beherrschende zweite Klappe als auch für die den Luftansaugkanal beherrschende erste Klappe, sind die Ventilsitze jeweils als umlaufende Anschläge ausgebildet, gegen die die Klappen in ihrer den jeweiligen Kanal verschließenden Stellung umlaufend aufliegen. Die Drehwelle ist an einer Gehäusewand zwischen der Mündung des Abgasrückführkanals und dem Ventilsitz im Luftansaugkanal angeordnet, jedoch außerhalb des Durchströmungsquerschnitts des stromaufwärtigen Kanalabschnitts angeordnet. Des Weiteren ist zu erkennen, dass für den Anschluss eines nachfolgenden Verdichtergehäuses am Außenumfang des Klappengehäuses eine Dichtung angeordnet ist. Beim Anschluss des Klappengehäuses würde dieses innen in das Verdichtergehäuse hineinragen.

Die DE 10 2012 101 851 B4 offenbart eine vergleichbare Regelvorrichtung, jedoch ist hier am Auslass des Klappengehäuses am Innenumfang eine Ausnehmung ausgebildet, in die das Verdichtergehäuse gegen einen Anschlag am Klappengehäuse eingeschoben werden kann.

Des Weiteren ist aus der DE 20 2014 100 190 U1 eine ähnliche Regelvorrichtung bekannt, bei der in einen Auslass des Mischgehäuses, in welches der Abgasrückführkanal und der Einlasskanal münden, ein Anschlussstutzen unter Zwischenlage eines Dichtringes eingeschoben ist. Eine präzise Ausrichtung dieses Anschlussstutzens zum Mischgehäuse ist nicht erreichbar, da der Anschlussstutzen zum Mischgehäuse verschoben werden kann.

Durch diese bekannten Anordnungen wird zwar eine ausreichende Regelbarkeit des Abgasstromes und des Luftstromes gewährleistet, jedoch besteht das Problem, dass das im Abgas und in der Luft gelöste Wasser insbesondere nach dem Abschalten der Verbrennungskraftmaschine insbesondere bei Start-Stop-Automatik entweder in Richtung des Verdichters strömt oder in einen Spalt zwischen den beiden Gehäusen eintritt. Beim erneuten Starten der Verbrennungskraftmaschine hat dies zur Folge, dass Wasser im flüssigen Zustand in Richtung des Verdichterlaufrades gefördert wird, was zu Schäden am Laufrad führen kann.

Es ist daher Aufgabe der Erfindung, eine Regelvorrichtung für eine Verbrennungskraftmaschine zu schaffen, mit der die Lebensdauer des Verdichters erhöht werden kann, indem die Belastung des Laufrades mit Flüssigkeit insbesondere nach dem Start der Verbrennungskraftmaschnie zuverlässig verhindert werden kann.

Diese Aufgabe wird durch eine Regelvorrichtung für eine Verbrennungskraftmaschine mit den Merkmalen des Hauptanspruchs gelöst.

Dadurch, dass der Ansaugkanal eine allseitige Querschnittserweiterung in einem stromabwärtigen Bereich aufweist, durch die eine Anschlagfläche an einem Mischgehäuseabschnitt gebildet ist, gegen die ein Anschlusselement, über welches ein durch einen Anschlussstutzen begrenzter Einlasskanal eines nachgeschalteten Verdichters fluidisch mit einem Auslass des Mischgehäuses verbunden ist, anliegt, wobei der Mischgehäuseabschnitt an seinem bezüglich der Erdoberfläche tiefsten Punkt im Vergleich zur Querschnittsform des Anschlusselementes eine Ausnehmung aufweist, die unterhalb einer axial gegenüberliegenden, das Anschlusselement an der Anschlagflache radial begrenzenden Innenwandfläche angeordnet ist und die in eine wannenförmige Vertiefung des Mischgehäuses mündet, wird erreicht, dass Flüssigkeit aus dem Verdichtergehäuse bei Stillstand des Verbrennungsmotors oder bei niedrigen Strömungsgeschwindigkeiten in Richtung der wannenförmigen Vertiefung des Mischgehäuses aus dem Verdichteranschlussstutzen abfließen kann. Dennoch steht eine ausreichende Anschlagfläche zur zuverlässigen Befestigung des Verdichteranschlussstutzens am Mischgehäuse zur Verfügung. Die Flüssigkeit kann so bis in den Abgasrückführkanal zurückströmen und wird dort beim Wiedereinschalten des Verbrennungsmotors verdampfen, so dass Schäden am Verdichterrad durch flüssiges Wasser zuverlässig vermieden werden oder über den Abgasrückführkanal und den Abgaskühler in den Auspuff ablaufen. Unter Anschlusselement wird in diesem Zusammenhang entweder der Einlassstutzen des Verdichters selber oder ein Element verstanden, über das der Einlassstutzen am Mischgehäuse befestigt wird, und dabei insbesondere den Einlassstutzen radial umgibt. Unter der Anschlagfläche wird im Sinne der Erfindung nicht nur die Fläche selbst verstanden, sondern der Mischgehäuseabschnitt, an dem die Anlagefläche ausgebildet ist.

Vorzugsweise weist das Anschlusselement einen runden, ovalen oder elliptischen an die Anschlagfläche angrenzenden Querschnitt auf und die Ausnehmung des Mischgehäuseabschnitts, an dem die Anschlagfläche ausgebildet ist, ist durch eine Streckung des Querschnitts der Anschlagfläche im Vergleich zum angrenzenden Querschnitt des Anschlusselementes nach unten ausgebildet. Insbesondere kann somit der die Anschlagfläche bildende Mischgehäuseabschnitt des Mischgehäuses eine hufeisenähnliche Form aufweisen, wobei das Hufeisen nach unten geöffnet ist. So entsteht für das Anschlusselement eine über den gesamten geschlossenen Bereich des Hufeisens eine Anlagefläche zur Lageausrichtung des Verdichtergehäuses zum Mischgehäuse und dennoch wird im unteren Bereich die Möglichkeit zum Abfluss des Wassers aus dem Verdichtergehäuse zum Abgasrückführkanal zur Verfügung gestellt.

Alternativ ist vorteilhaft, wenn die Ausnehmung im unteren Bereich des Mischgehäuseabschnitts, an dem die Anschlagflache ausgebildet ist, durch eine oder mehrere Bohrungen gebildet ist. Auch über diese Bohrungen kann die Flüssigkeit aus dem Verdichtergehäuse zum Schutz des Verdichterrades abfließen. Eine derartige Ausbildung des Ablaufs kann auch im Nachhinein noch in den Mischgehäuseabschnitt eingebracht werden.

Wiederum alternativ hierzu sind mehrere nebeneinander liegende Axialnuten im unteren Bereich des Mischgehäuseabschnitts, an dem die Anschlagfläche ausgebildet ist, ausgebildet. Diese können beispielsweise durch Fräsen oder Sägen eingebracht werden, um den Kondensatablauf zu ermöglichen. Unter Axialnuten wird in diesem Zusammenhang eine Nut verstanden die sich von der Anschlagfläche in axialer Richtung durch den Mischgehäuseabschnitt erstreckt.

In einer bevorzugten Ausbildung der Erfindung bildet der den Einlasskanal begrenzende Anschlussstutzen des nachgeschalteten Verdichters das Anschlusselement. Entsprechend ist der Anschlussstutzen des Verdichters direkt, beispielsweise unter Zwischenlage von einem oder mehreren Radialdichtringen, im Mischgehäuseabschnitt befestigt, so dass auf zusätzliche Bauteile verzichtet werden kann, was die Montage vereinfacht.

In einer alternativen bevorzugten Ausführungsform ragt der Anschlussstutzen des nachgeschalteten Verdichters in ein Zwischenelement, welches das Anschlusselement bildet und radial zwischen dem stromabwärtigen Bereich des Ansaugkanals und dem Anschlussstutzen angeordnet ist. Durch dieses Zwischenelement können Fertigungsungenauigkeiten oder leichte Verschiebungen der Winkellage der Gehäuse des Verdichters zum Mischgehäuse ausgeglichen werden.

Dabei ist es vorteilhaft, wenn das Zwischenelement an seiner radialen Innenfläche und an seiner radialen Außenfläche jeweils mindestens eine Nut aufweist, in der jeweils ein Radialdichtelement angeordnet ist, über welches ein Spalt zwischen dem stromabwärtigen Bereich des Mischgehäuses und dem Anschlussstutzen abgedichtet ist. Ein Austreten des Kondensats wird so ebenso zuverlässig verhindert, wie ein Eindringen eines zusätzlichen, nicht gemessenen Gasstroms von außen.

Vorzugsweise ist der Einlasskanal des Verdichters sich in Strömungsrichtung kegelförmig verengend ausgebildet. Entsprechend läuft das im Einlasskanal vorhandene Kondensat nach dem Abschalten des Verbrennungsmotors entlang der Wandfläche des Anschlussstutzens in Richtung des Mischgehäuses und somit zum Abgasrückführkanal.

In einer vorteilhaften Ausführungsform ist eine radiale Innenwandfläche des Zwischenelementes an ihrem der Anschlagfläche gegenüberliegenden Bereich, welcher über den Anschlussstutzen des Verdichters hinausragt, sich in Richtung der Anschlagfläche konisch erweiternd ausgebildet. Aus dem Anschlussstutzen strömendes Kondensat tropft bei dieser Ausführung auf diese Erweiterung und wird in Richtung des Mischgehäuses abgeführt und von den Dichtungen ferngehalten, so dass keine Sammelstellen für das Wasser im Bereich des Anschlusses der Gehäuse gebildet werden.

Vorzugsweise ist die Welle außerhalb des Durchströmungsquerschnitts eines ersten stromaufwärtigen Kanalabschnitts des Ansaugkanals angeordnet, wodurch Druckverluste zuverlässig verhindert werden.

Des Weiteren ist es besonders vorteilhaft, wenn der Abgasrückführkanal an einer tiefsten Stelle des wannenförmigen Bereiches des Mischgehäuses in den Ansaugkanal mündet. Durch eine derartige Ausführung gelangt das Kondensat nicht nur in das Mischgehäuse, sondern kann bei Stillstand des Verbrennungsmotors auch tatsächlich in den Abgasrückführkanal fließen, um dort beim nächsten Start verdampft werden zu können oder weiter über den Kühler zum Auspuff strömen zu können.

Vorteilhafterweise ist der erste stromaufwärtige Kanalabschnitt durch einen Ventilsitz begrenzt, gegen den der Regelkörper in einer den Ansaugkanal vollständig verschließenden Stellung umlaufend anliegt. Auf diese Weise kann ein dichter Verschluss des Ansaugkanals hergestellt werden.

Eine besonders einfache Herstellung dieses Ventilsitzes ergibt sich, wenn der Ventilsitz durch ein axiales Ende eines ersten Gehäuseteils des Mischgehäuses gebildet ist, welches den stromaufwärtigen Kanalabschnitt bildet und in ein zweites Gehäuseteil des Mischgehäuses ragt.

Es wird somit eine Regelvorrichtung geschaffen, mit der Schäden an hinter einem Mischgehäuse angeordneten Verdichter durch anfallendes und zum Verdichter gefördertes Kondensat, welches sich insbesondere nach dem Abschalten des Motors im Bereich des Anschlussstutzens des Verdichters und im Mischgehäuse der Regelvorrichtung sammelt, verhindert werden, indem das Kondensat aus dem Anschlussstutzen des Verdichters zum Mischgehäuse und damit zum Abgasrückführkanal strömen kann, so dass beim Starten des Motors das flüssige Kondensat durch die Wärme des Abgasstorms verdampft werden kann, bevor es zum Verdichterlaufrad gelangt. So wird die Lebensdauer des Verdichters erhöht.

Ein Ausführungsbeispiel einer erfindungsgemäßen Regelvorrichtung ist in den Figuren dargestellt und wird nachfolgend beschrieben.
Die Figur 1 zeigt eine Seitenansicht einer ersten Ausführungsform einer erfindungsgemäßen Regelvorrichtung in geschnittener Darstellung.
Die Figur 2 zeigt eine Seitenansicht einer zweiten Ausführungsform einer erfindungsgemäßen Regelvorrichtung in geschnittener Darstellung.
Die Figur 3 zeigt eine Kopfansicht bei einem Schnitt entlang der Linie III-III in Figur 1.
Die Figur 4 zeigt eine alternative Ausführung zu der in Figur 3 dargestellten Ausbildung.
Die Figur 5 zeigt eine weitere alternative Ausführung zu der in Figur 3 dargestellten Ausbildung.

Die erfindungsgemäße Regelvorrichtung besteht aus einem Mischgehäuse 10, welches einen Ansaugkanal 12 begrenzt und in dem eine Mündung 14 eines Abgasrückführkanals 16 ausgebildet ist. Der Ansaugkanal 12 verläuft im Wesentlichen in gerader Richtung, während der Abgasrückführkanal 16 im relativ zur Erdoberfläche unteren Bereich des Mischgehäuses 10 senkrecht zum Ansaugkanal 12 in diesen mündet.

Das Mischgehäuse 10 besteht aus einem ersten, im Wesentlichen rohrförmig ausgebildeten Gehäuseteil 18, welches einen ersten Kanalabschnitt 19 bildet und dessen stromabwärtiges Ende schräg ausgebildet ist und einen Winkel α von etwa 75° zu einer Mittelachse 20 des Gehäuseteils 18 einschließt. Das stromabwärtige Ende des ersten Gehäuseteils 18 ist im Innern eines zweiten Gehäuseteils 22 angeordnet, beziehungsweise wird in das zweite Gehäuseteil 22 bis zur Anlage eines Flansches 24 eingeschoben, über den das erste Gehäuseteil 18 mittels Schrauben 26 am zweiten Gehäuseteil 22 befestigt ist. Das zweite Gehäuseteil 22 bildet einen zweiten Kanalabschnitt 28 des Ansaugkanals 12, in dem eine Öffnung 30 ausgebildet ist, welche in Strömungsrichtung in kurzem Abstand hinter dem schrägen Ende des ersten Gehäuseteils 18 angeordnet ist und welches als Aufnahme für ein drittes Gehäuseteil 32 dient, welches die Mündung 14 des Abgasrückführkanals 16 bildet, dessen Mittelachse 34 senkrecht zur Mittelachse 20 des Ansaugkanals 12 angeordnet ist.

Im Mischgehäuse 10 ist eine Welle 36 drehbar angeordnet, die über einen nicht sichtbaren Aktor betätigt werden kann. Die Drehachse 38 dieser Welle 36 ist senkrecht zu den Mittelachsen 20, 34 angeordnet und befindet sich zwischen der zur Welle 36 stromabwärtigen Mündung 14 des Abgasrückführkanals 16 und dem axialen Ende des ersten Gehäuseteils 18 und unmittelbar stromabwärts des ersten Gehäuseteils 18. Der Gesamtquerschnitt des ersten Gehäuseteils 18 ist kleiner als der des zweiten Gehäuseteils 22 des Ansaugkanals 12, wobei das erste Gehäuseteil 18 derart am zweiten Gehäuseteil 22 befestigt ist, dass eine im Bereich der Mündung 14 des Abgasrückführkanals 16 ausgebildete Ausnehmung 40 außerhalb des Durchströmungsquerschnitts angeordnet ist, in der die Welle 36 das zweite Gehäuseteil 22 durchdringend angeordnet ist.

An dieser exzentrisch im Ansaugkanal 12 angeordneten Welle 36 ist ein Regelkörper 42 befestigt, der innerhalb des zweiten Kanalabschnitts 28 drehbar angeordnet ist und aus einem ersten Klappenteil 44 sowie einem zweiten Klappenteil 45 besteht, welches eine Halteachse 46 und einen daran kippbeweglich befestigten Klappenkörper 48 aufweist, wobei die Halteachse 46 in einer Bohrung 49 des ersten Klappenteils 44 befestigt ist. Das erste Klappenteil 44 weist eine Aufnahmeöffnung auf, in der die Welle 36 befestigt ist und ist mittels der Welle 36 in einer ersten Endstellung gegen das Ende des ersten Gehäuseteils 18 drehbar, welches entsprechend als erster Ventilsitz 50 dient, während der Klappenkörper 48 gegen ein Ende der Mündung 14 des Abgasrückführkanals 16 drehbar ist, welches als zweiter Ventilsitz 52 dient. Entsprechend wird bei Drehung der Welle 36 in dem Maße in dem der erste Klappenteil 44 den Ansaugkanal 12 freigibt, der Abgasrückführkanal 16 durch den Klappenkörper 48 geschlossen und umgekehrt. Die kippbewegliche Befestigung des Klappenkörpers 48 führt bei dieser Drehbewegung der Welle 36 in eine zweite Endstellung, in der der Klappenkörper 48 auf dem zweiten Ventilsitz 52 aufliegt, dazu, dass ein vollständiger dichter Verschluss des Abgasrückführkanals 16 erfolgt, da der Klappenkörper 48 seine Stellung durch die mögliche Kippbewegung an die Lage des zweiten Ventilsitzes 52 anpassen kann, auch wenn dieser nicht vollständig in der Flucht zur Drehachse 38 liegt.

In seiner anderen, nicht dargestellten Endstellung, liegt der Klappenkörper 48 auf dem Ventilsitz 52 des Abgasrückführkanals 16 auf, während der erste Klappenteil 44 den Ansaugkanal 12 vollständig freigibt. Selbstverständlich sind auch alle Zwischenstellungen zur Regelung anfahrbar.

Im stromabwärtigen Bereich des Ansaugkanals 12, ist am zweiten Gehäuseteil 22 ein Mischgehäuseabschnitt 53 ausgebildet, an dem eine Querschnittserweiterung 54 ausgebildet ist, durch die eine axiale Anschlagfläche 56 erzeugt wird. Mit diesem Querschnitt setzt sich das Mischgehäuse 10 bis zu seinem Auslass 58 fort. In diesen Auslass 58 ragt ein Anschlussstutzen 60 eines Verdichters 62, der einen Einlasskanal 64 des Verdichters 62 bildet, dessen radiale Innenwandfläche 63 sich in Strömungsrichtung kegelförmig verengend ausgebildet ist.

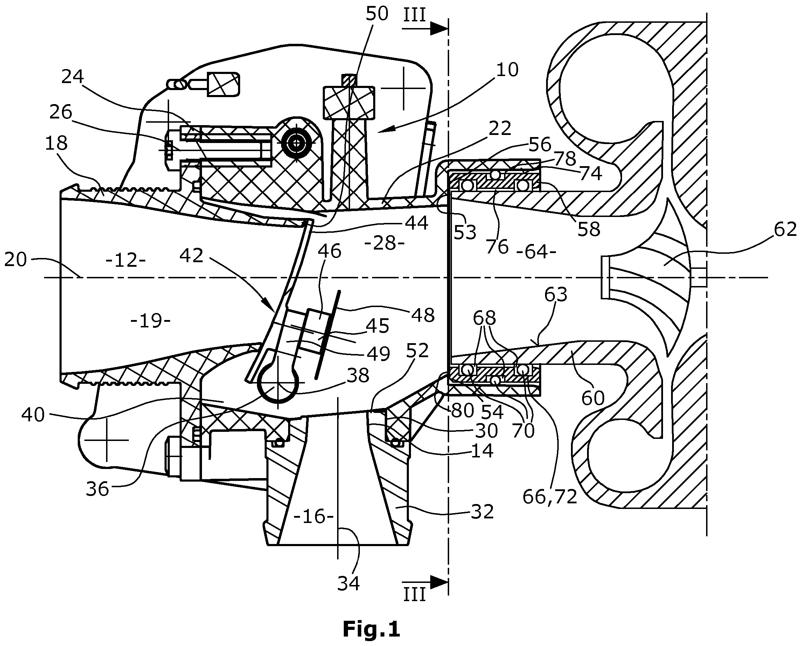

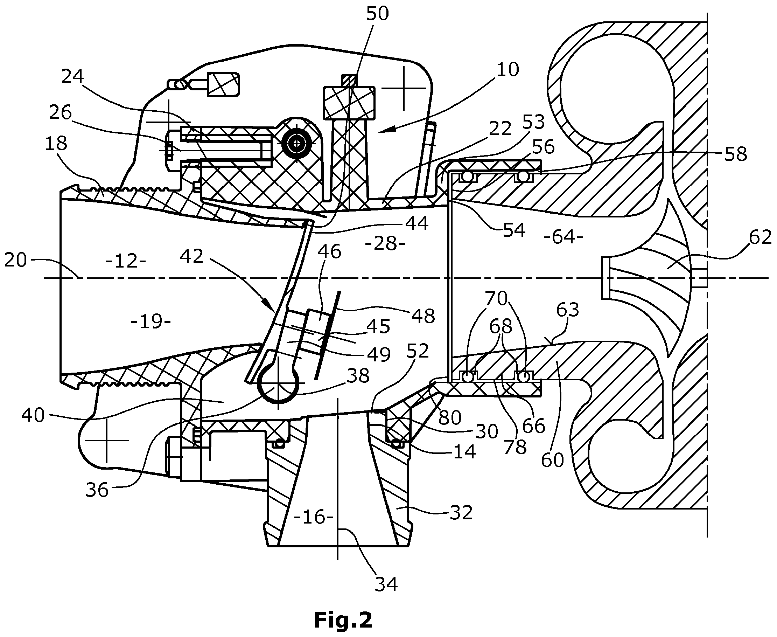

Bei dem Ausführungsbeispiel gemäß Figur 2, dient der Anschlussstutzen 60 selbst als Anschlusselement 66 und ragt unter Zwischenlage eines in einer Nut 68 angeordneten Dichtelements 70 in Form eines Radialdichtrings in den Auslass 58 des Mischgehäuses 10, während im Ausführungsbeispiel gemäß Figur 1 als Anschlusselement 66 ein ringförmiges Zwischenelement 72 dient, an dessen radialer Außenfläche 74 eine Nut 68 ausgebildet ist, in der ein als Radialdichtring ausgebildetes Dichtelement 70 angeordnet ist und an dessen radialer Innenfläche 76 zwei weitere Nuten 68 ausgebildet sind, in denen jeweils ein weiteres Dichtelement 70 angeordnet ist.

Sowohl durch das Dichtelement 70 am Außenumfang des Verdichters 62 als auch durch die Dichtelemente 70 am Zwischenelement 72 wird ein Spalt 78 zwischen dem stromabwärtigen Bereich des Mischgehäuses 10 und dem jeweiligen Anschlusselement 66 abgedichtet.

Das Zwischenelement 72 wird bei der Ausführung gemäß der Figur 1 gegen die Anschlagfläche 56 des Mischgehäuseabschnitts 53 geschoben, während der Anschlussstutzen 60 des Verdichters 62 in das ringförmige Zwischenelement 72 geschoben wird.

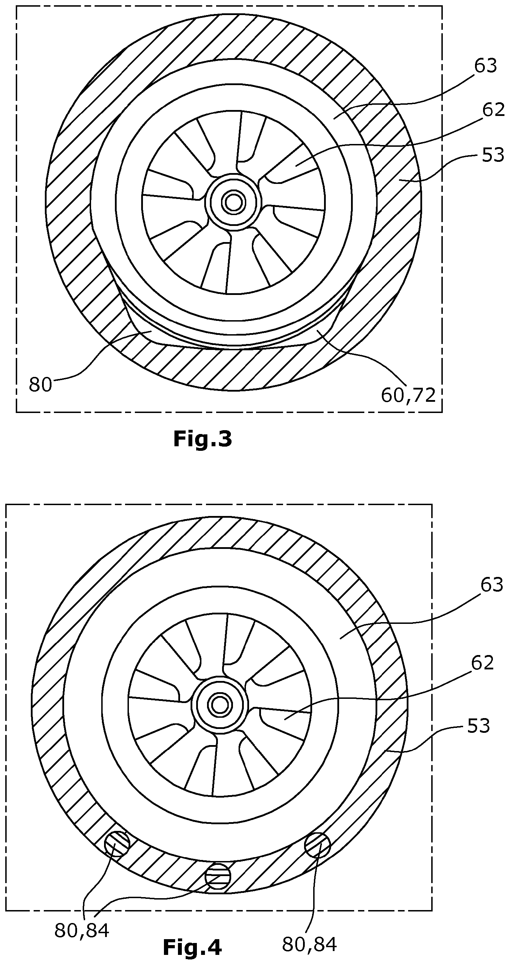

Erfindungsgemäß weist nun der Mischgehäuseabschnitt 53, an dem die Anschlagfläche 56 ausgebildet ist, eine im bezogen auf die Erdoberfläche unteren Bereich eine Ausnehmung 80 auf, so dass in diesem unteren Bereich die Anschlagfläche 56 lediglich dem Zwischenelement 72 gegenüberliegend ausgebildet ist, jedoch gegenüberliegend zum Anschlussstutzen 60 keine Anlagefläche vorliegt. Auch ist es möglich, in diesem unteren Bereich vollständig auf die Anschlagfläche 56 zu verzichten. Der Querschnitt in diesem Mischgehäuseabschnitt 53 entspricht bei den Ausführungen gemäß der Figuren 1 bis 3 etwa einer Hufeisenform, welche nach unten geöffnet ausgebildet ist. Diese Form ist in Figur 3 deutlich zu erkennen. Die Ausnehmung 80 bildet somit hier eine Streckung des freien Querschnitts des Mischgehäuseabschnitts 53 nach unten hin, so dass die Anschlagfläche 56 in diesem unteren Bereich unterhalb einer gegenüberliegenden, radial begrenzenden Innenwandfläche des Anschlusselementes 66 angeordnet ist, welche beim Ausführungsbeispiel gemäß Figur 1 durch die radiale Innenfläche des Zwischenelementes 72 und beim Ausführungsbeispiel gemäß Figur 2 durch die Innenwandfläche 63 des Anschlussstutzens 60 des Verdichters 62 gebildet wird.

Beim Abschalten des Verbrennungsmotors kühlt der Verdichter 62 und mit ihm das Mischgehäuse 10 und der Anschlussstutzen 60 ab. Wasserdampf, der zu diesem Zeitpunkt im zuvor angesaugten Gasstrom gelöst war, kondensiert aus und läuft entlang der Innenwandfläche 63 des Einlasskanals 64 der Schwerkraft entsprechend nach unten. Durch die Kegelform des Einlasskanals 64 strömt dieses Wasser in Richtung des Mischgehäuses 10. Durch die Ausnehmung 80 im unteren Bereich des Mischgehäuseabschnitts 53, sammelt sich dieses Wasser jedoch nicht zwischen dem jeweiligen Anschlusselement 66 und der Anschlagfläche 56 des Mischgehäuses 10, sondern gelangt in das Mischgehäuse 10, welches in diesem Bereich eine wannenförmige Vertiefung 82 aufweist, an deren unteren Ende der Abgasrückführkanal 16 mpndet, so dass das Wasser zum Abgasrückführkanal 16 geleitet wird, wo es beim Neustart des Motors durch die Wärme des Abgases wieder verdampft und somit nicht als Wasser zum Verdichter 16 gelangen kann, wodurch Schäden am Verdichter verhindert werden. Alternativ gelangt das Kondensat über den Kühler in den Auspuff und somit hinter die Abgasentnahmestelle, so dass es wiederum nicht zum Verdichter gelangen kann.

Um bei der Ausführung gemäß Figur 1 sicher zu stellen, dass das Wasser nicht in einen Spalt zwischen dem Zwischenelement 72 und dem Anschlussstutzen 60 des Verdichters! 62 strömt, weist das Zwischenelement 72 eine konisch geformte! Innenwandfläche 76 in einem Bereich auf, der zur Anschlagfläche 56 oder zumindest zur Ausnehmung 80 des Mischgehäuseabschnitts 53 des Mischgehäuses 10 gegenüberliegend angeordnet ist und axial über das Ende des Anschlussstutzens 60 des Verdichters 62 hinausragt, so dass Wasser, welches vom Anschlussstutzen 60 auf das Zwischenelement 72 tropft, ebenfalls in die wannenförmige Vertiefung 82 des Mischgehäuses 10 abgeführt wird.

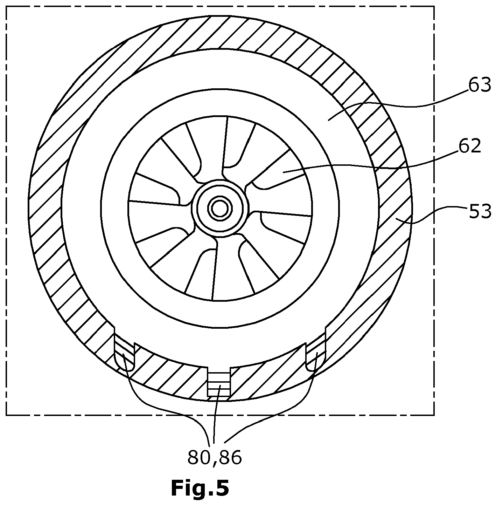

Bei den Ausführungen gemäß der Figuren 4 und 5, wird die Ausnehmung 80, über die das Wasser aus dem Anschlussstutzen 60 zum Mischgehäuse10 abgeführt werden kann, durch nebeneinanderliegende Bohrungen 84 (Fig. 4) oder Axialnuten 86 (Fig.5) gebildet, die in einem auf die Erdoberfläche bezogen unteren Bereich des Mischgehäuseabschnitts 53 ausgebildet sind.

Die beschriebene Regelvorrichtung eignet sich somit zur Nutzung vor einem Verdichter eines Verbrennungsmotors, der entweder elektrisch oder als Verdichter eines Abgasturboladers ausgebildet sein kann. In beiden Fällen wird verhindert, dass das sich schnell drehende Verdichterrad von flüssigem Wasser angeströmt wird, wodurch Schäden am Verdichter verursacht würden, indem das beim Stoppen des Verbrennungsmotors auskondensierende Wasser zum Abgasrückführkanal abgeführt wird. Die erfindungsgemäßen Ausführungsformen sind auch geeignet, während des Motorbetriebes das sich ständig bildende Kondensat kontinuierlich vom Verdichter wegzuführen und so zu verhindern, dass im Fall von Gasstößen das Kondensat zum Verdichter mitgerissen werden kann und so zu erosiven Schäden am Verdichterrad führen könnte. Dennoch kann eine feste und dichte Anbindung des Verdichters an das Mischgehäuse der Regelvorrichtung hergestellt werden.

## Patentansprüche

1. Regelvorrichtung für eine Verbrennungskraftmaschine mit einem Ansaugkanal (12),
einem Abgasrückführkanal (16), der in den Ansaugkanal (12) mündet,
einem Regelkörper (42),
einem Mischgehäuse (10), in welchem der Ansaugkanal (12) ausgebildet ist und welches in der vorgesehenen Einbaulage im bezogen auf die Erdoberfläche unteren Bereich eine Mündung (14) des Abgasrückführkanals (16) aufweist,
einer als Drehachse (38) dienenden Welle (36), auf der der Regelkörper (42) exzentrisch befestigt ist und die im Ansaugkanal (12) stromaufwärts der Mündung (14) des Abgasrückführkanals (16) im Mischgehäuse (10) gelagert ist,
wobei der Regelkörper (42) durch Drehung der Welle (36) zwischen einer ersten Endstellung, in der der Regelkörper (42) den Ansaugkanal (12) zumindest drosselt und einer zweiten Endstellung, in der der Regelkörper (42) den Abgasrückführkanal (16) verschließt, bewegbar ist, wobei der Ansaugkanal (12) eine allseitige Querschnittserweiterung (54) in einem stromabwärtigen Bereich aufweist, durch die eine Anschlagfläche (56) an einem Mischgehäuseabschnitt (53) gebildet ist, **gekennzeichnet durch**
ein Anschlusselement (66), über welches ein durch einen Anschlussstutzen (60) begrenzter Einlasskanal (64) eines nachgeschalteten Verdichters (62) fluidisch mit einem Auslass (58) des Mischgehäuses (10) verbunden ist, wobei das Anschlusselement (66) gegen die Anschlagfläche (56) anliegt, wobei der Mischgehäuseabschnitt (53) in der vorgesehenen Einbaulage zumindest an seinem bezüglich der Erdoberfläche tiefsten Punkt im Vergleich zur Querschnittsform des Anschlusselementes (66) eine Ausnehmung (80) aufweist, die unterhalb einer axial gegenüberliegenden, das Anschlusselement (66) an der Anschlagfläche (56) radial begrenzenden Innenwandfläche (63, 76) angeordnet ist und die in eine wannenförmige Vertiefung (82) des Mischgehäuses (10) mündet.

2. Regelvorrichtung für eine Verbrennungskraftmaschine nach Anspruch 1,
**dadurch gekennzeichnet, dass**
das Anschlusselement (66) einen runden, ovalen oder elliptischen an die Anschlagfläche (56) angrenzenden Querschnitt aufweist und die Ausnehmung (80) des Mischgehäuseabschnitts (53), an dem die Anschlagfläche (56) ausgebildet ist, durch eine Streckung des Querschnitts des Mischgehäuseabschnitts (53) im Vergleich zum angrenzenden Querschnitt des Anschlusselementes (66) nach unten ausgebildet ist.

3. Regelvorrichtung für eine Verbrennungskraftmaschine nach Anspruch 1,
**dadurch gekennzeichnet, dass**
die Ausnehmung (80) im unteren Bereich des Mischgehäuseabschnitts (53), an dem die Anschlagfläche (56) ausgebildet ist, durch eine oder mehrere Bohrungen (84) gebildet ist.

4. Regelvorrichtung für eine Verbrennungskraftmaschine nach Anspruch 1,
**dadurch gekennzeichnet, dass**
mehrere nebeneinander liegende Axialnuten (86) im unteren Bereich des Mischgehäuseabschnitts (53), an dem die Anschlagfläche (56) ausgebildet ist, ausgebildet sind.

5. Regelvorrichtung für eine Verbrennungskraftmaschine nach einem der vorhergehenden Ansprüche,
**dadurch gekennzeichnet, dass**
der den Einlasskanal (64) begrenzende Anschlussstutzen (60) des nachgeschalteten Verdichters (62) das Anschlusselement (66) bildet.

6. Regelvorrichtung für eine Verbrennungskraftmaschine nach einem der Ansprüche 1 bis 4,
**dadurch gekennzeichnet, dass**
der Anschlussstutzen (60) des nachgeschalteten Verdichters (62) in ein Zwischenelement (72) ragt, welches das Anschlusselement (66) bildet und radial zwischen dem stromabwärtigen Bereich des Ansaugkanals (12) und dem Anschlussstutzen (60) angeordnet ist.

7. Regelvorrichtung für eine Verbrennungskraftmaschine nach Anspruch 6,
**dadurch gekennzeichnet, dass**
das Zwischenelement (72) an seiner radialen Innenfläche (76) und an seiner radialen Außenfläche (74) jeweils mindestens eine Nut (68) aufweist, in der jeweils ein Dichtelement (70) angeordnet ist, über welches ein Spalt (78) zwischen dem stromabwärtigen Bereich des Mischgehäuses (10) und dem Anschlussstutzen (60) abgedichtet ist.

8. Regelvorrichtung für eine Verbrennungskraftmaschine nach einem der vorhergehenden Ansprüche,
**dadurch gekennzeichnet, dass**
der Einlasskanal (64) des Verdichters (62) sich in Strömungsrichtung kegelförmig verengend ausgebildet ist.

9. Regelvorrichtung für eine Verbrennungskraftmaschine nach einem der vorhergehenden Ansprüche,
**dadurch gekennzeichnet, dass**
eine radiale Innenwandfläche (76) des Zwischenelementes (72) an ihrem der Anschlagfläche (56) gegenüberliegenden Bereich, welcher axial über den Anschlussstutzen (60) des Verdichters (62) hinausragt, sich in Richtung der Anschlagfläche (56) konisch erweiternd ausgebildet ist.

10. Regelvorrichtung für eine Verbrennungskraftmaschine nach einem der vorhergehenden Ansprüche,
**dadurch gekennzeichnet, dass**
die Welle (36) außerhalb des Durchströmungsquerschnitts eines ersten stromaufwärtigen Kanalabschnitts (19) des Ansaugkanals (12) angeordnet ist.

11. Regelvorrichtung für eine Verbrennungskraftmaschine nach einem der vorhergehenden Ansprüche,
**dadurch gekennzeichnet, dass**
der Abgasrückführkanal (16) an einer tiefsten Stelle der wannenförmigen Vertiefung (82) des Mischgehäuses (10) in den Ansaugkanal (12) mündet.

12. Regelvorrichtung für eine Verbrennungskraftmaschine nach einem der vorhergehenden Ansprüche,
**dadurch gekennzeichnet, dass**
der erste stromaufwärtige Kanalabschnitt (19) durch einen Ventilsitz (50) begrenzt ist, gegen den der Regelkörper (42) in einer den Ansaugkanal (12) vollständig verschließenden Stellung umlaufend anliegt.

13. Regelvorrichtung für eine Verbrennungskraftmaschine nach Anspruch 12,
**dadurch gekennzeichnet, dass**
der Ventilsitz (50) durch ein axiales Ende eines ersten Gehäuseteils (18) des Mischgehäuses (10) gebildet ist, welches den stromaufwärtigen Kanalabschnitt (19) bildet und in ein zweites Gehäuseteil (22) des Mischgehäuses (10) ragt.

## Claims

1. A control device for an internal combustion engine, comprising
an intake channel (12),
an exhaust gas recirculation channel (16) entering into the intake channel (12),
a control element (42),
a mixing housing (10) in which the intake channel (12) is formed and which, in the intended installation position, comprises mouth (14) of the exhaust gas recirculation channel (16) in the lower area in relation to the ground surface,
a shaft (36) serving as a rotation axis (38) on which the control element (42) is eccentrically fixed and which is mounted in the intake channel (12) upstream the mouth (14) of the exhaust gas recirculation channel (16) in the mixing housing (10),
wherein the control element (42) is movable, by rotating the shaft (36), between a first end position, in which the control element (42) at least throttles the intake channel (12), and a second end position, in which the control element (42) closes the exhaust gas recirculation channel (16),
wherein the intake channel (12) comprises, in a downstream area, an all-around cross-sectional extension (54), through which a stop face (56) is formed on a mixing housing section (53),
**characterized by** a connection element (66), through which an inlet channel (64), limited by a connection nozzle (60), of a downstream compressor (62) is in fluid communication with the outlet (58) of the mixing housing (10), wherein the connection element (66) abuts against the stop face (56), wherein, in the intended installation position, the mixing housing section (53) comprises at least at the lowest point thereof in relation to the ground surface, in comparison to the cross-sectional shape of the connection element (66), a recess (80) which is arranged below an axially opposite inner wall surface (63, 76) radially limiting the connection element (66) on the stop face (56) and which enters into a trough-shaped depression (82) of the mixing housing (10).

2. The control device for an internal combustion engine according to claim 1,
**characterized in that**
the connection element (66) comprises a round, oval or elliptical cross-section adjacent to the stop face (56), and the recess (80) of the mixing housing section (53), on which the stop face (56) is formed, is formed downwards due to an extension of the cross-section of the mixing housing section (53) in comparison to the adjacent cross-section of the connection element (66).

3. The control device for an internal combustion engine according to claim 1,
**characterized in that**
the recess (80) is formed by one or a plurality of bores (84) in the lower area of the mixing housing section (53) on which the stop face (56) is formed.

4. The control device for an internal combustion engine according to claim 1,
**characterized in that**
a plurality of adjacent axial grooves (86) are formed in the lower area of the mixing housing section (53) on which the stop face (56) is formed.

5. The control device for an internal combustion engine according to any one of the preceding claims,
**characterized in that**
the connection nozzle (60) of the downstream compressor (62), limiting the inlet channel (64), forms the connection element (66).

6. The control device for an internal combustion engine according to any one of claims 1 to 4,
**characterized in that**
the connection nozzle (60) of the downstream compressor (62) protrudes into an intermediate element (72) forming the connection element (66) and being arranged radially between the downstream area of the intake channel (12) and the connection nozzle (60).

7. The control device for an internal combustion engine according to claim 6,
**characterized in that**
the intermediate element (72) comprises on its radial inner surface (76) and on its radial outer surface (74) respectively at least one groove (68) in which respectively one sealing element (70) is arranged by means of which a gap (78) between the downstream area of the mixing housing (10) and the connection nozzle (60) is sealed.

8. The control device for an internal combustion engine according to any one of the preceding claims,
**characterized in that**
the inlet channel (64) of the compressor (62) is designed conically narrowing towards the flow direction.

9. The control device for an internal combustion engine according to any one of the preceding claims,
**characterized in that**
a radial inner wall surface (76) of the intermediate element (72) is formed conically extending towards the stop face (56) in its area opposite to stop face (56) and protruding from the connection nozzle (60) of the compressor (62).

10. The control device for an internal combustion engine according to any one of the preceding claims,
**characterized in that**
the shaft (36) is arranged outside the flow cross-section of a first upstream channel section (19) of the intake channel (12).

11. The control device for an internal combustion engine according to any one of the preceding claims,
**characterized in that**
the exhaust gas recirculation channel (16) enters into the intake channel (12) at a lowest point of the trough-shaped depression (82) of the mixing housing (10).

12. The control device for an internal combustion engine according to any one of the preceding claims,
**characterized in that**
the first upstream channel section (19) is limited by a valve seat (50) against which the control element (42) abuts in a position completely closing the intake channel (12).

13. The control device for an internal combustion engine according to any claim 12,
**characterized in that**
a valve seat (50) is formed by an axial end of a first housing part (18) of the mixing housing (10) forming the upstream channel section (19) and protruding into a second housing part (22) of the mixing housing (10).

## Revendications

1. Dispositif de commande pour un moteur à combustion interne comprenant
un conduit d'aspiration (12),
un conduit de recirculation des gaz d'échappement (16) s'ouvrant dans le conduit d'aspiration (12),
un organe de commande (42),
un carter de mélange (10), dans lequel le conduit d'aspiration (12) est formé et qui. dans la position d'installation intendue, a une ouverture (14) du conduit de recirculation des gaz d'échappement (16) dans la zone inférieure par rapport à la surface de la terre,
un arbre (36) servant d'axe de rotation (38), sur lequel le corps de régulation (42) est fixé de manière excentrique et qui est supporté dans le conduit d'aspiration (12) en amont de l'embouchure (14) du conduit de recirculation des gaz d'échappement (16) dans le carter de mélange (10),
le corps de commande (42) étant mobile, en faisant tourner l'arbre (36) entre une première position d'extrémité dans laquelle le corps de commande (42) étrangle au moins le conduit d'aspiration (12) et une deuxième position d'extrémité dans laquelle le corps de commande (42) ferme le conduit de recirculation des gaz d'échappement (16),
le conduit d'aspiration (12) ayant un élargissement de section transversale (54) sur tous les côtés dans une zone en aval, au moyen duquel une surface d'arrêt (56) est formée sur une section de carter de mélange (53),
**caractérisé par** un élément de raccordement (66), via lequel un canal d'admission (64) d'un compresseur en aval (62), limité par une pièce de raccordement (60), est relié fluidiquement à une sortie (58) du carter de mélange (10), ledit élément de raccordement (66) s'appuyant sur la surface d'arrêt (56), la section du carter de mélange (53) comprenant, dans la position d'installation intendue, au moins à son point le plus bas par rapport à la surface de la terre en comparaison avec la forme en coupe transversale dudit élément de raccordement (66) un évidement (80) disposé sous une surface de paroi intérieure (63, 76) axialement opposée qui délimite radialement l'élément de raccordement (66) sur la surface d'arrêt (56) et qui s'ouvre dans un évidement en forme de cuve (82) du carter de mélange (10).

2. Dispositif de commande pour un moteur à combustion interne selon la revendication 1, **caractérisé en ce que** l'élément de raccordement (66) présente une section transversale ronde, ovale ou elliptique contiguë à la surface d'arrêt (56), et l'évidement (80) de la section du carter de mélange (53) sur lequel est formée la surface d'arrêt (56) est formé en prolongeant la section transversale de la section du carter de mélange (53) vers le bas par rapport à la section transversale contiguë de l'élément de raccordement (66).

3. Dispositif de commande pour un moteur à combustion interne selon la revendication 1, **caractérisé en ce que** l'évidement (80) dans la région inférieure de la section du carter de mélange (53) sur laquelle la surface d'arrêt (56) est formée, est formé par un ou plusieurs alésages (84).

4. Dispositif de commande pour un moteur à combustion interne selon la revendication 1, **caractérisé en ce que** plusieurs rainures (86) axiales adjacentes sont formées dans la région inférieure de la section du carter de mélange (53) sur laquelle la surface d'arrêt (56) est formée.

5. Dispositif de commande pour un moteur à combustion interne selon l'une quelconque des revendications précédentes, **caractérisé en ce que** la pièce de raccordement (60) du compresseur aval (62) délimitant le canal d'admission (64) forme l'élément de raccordement (66).

6. Dispositif de commande d'un moteur à combustion interne selon l'une des revendications 1 à 4, **caractérisé en ce que** la pièce de raccordement (60) du compresseur aval (62) fait saillie dans un élément intermédiaire (72) qui forme l'élément de raccordement (66) et est disposée radialement entre la région avale du canal d'admission (12) et la pièce de raccordement (60).

7. Dispositif de commande d'un moteur à combustion interne selon la revendication 6, **caractérisé en ce que** l'élément intermédiaire (72) présente au moins une rainure (68) sur sa surface intérieure radiale (76) et sur sa surface extérieure radiale (74), dans chacune desquelles est disposé un élément d'étanchéité (70), par lequel une fente (78) entre la région avale du carter de mélange (10) et de la pièce de raccordement (60) est étanchéifiée.

8. Dispositif de commande pour un moteur à combustion interne selon l'une quelconque des revendications précédentes, **caractérisé en ce que** le canal d'admission (64) du compresseur (62) se rétrécit de manière conique dans le sens de l'écoulement.

9. Dispositif de commande pour un moteur à combustion interne selon l'une quelconque des revendications précédentes, **caractérisé en ce qu'**une surface de paroi intérieure radiale (76) dudit élément intermédiaire (72) au niveau de sa région opposée à la surface d'arrêt (56), qui fait saillie axialement au-delà de la pièce de raccordement (60) du compresseur (62), s'élargit de manière conique en direction de la surface d'arrêt (56).

10. Dispositif de commande pour un moteur à combustion interne selon l'une quelconque des revendications précédentes, **caractérisé en ce que** l'arbre (36) est disposé à l'extérieur de la section transversale d'écoulement d'une première section de canal (19) amont du canal d'admission (12).

11. Dispositif de commande pour un moteur à combustion interne selon l'une quelconque des revendications précédentes, **caractérisé en ce que** le conduit de recirculation des gaz d'échappement (16) s'ouvre dans le canal d'admission (12) au point le plus profond de l'évidement en forme de cuve (82) du carter de mélange (10).

12. Dispositif de commande pour un moteur à combustion interne selon l'une quelconque des revendications précédentes, **caractérisé en ce que** la première section de canal (19) amont est délimitée par un siège de soupape (50) sur lequel le corps de commande (42) s'appuie circonférentiellement dans une position qui ferme complètement le canal d'admission (12).

13. Dispositif de commande d'un moteur à combustion interne selon la revendication 12, **caractérisé en ce que** le siège de soupape (50) est formé par une extrémité axiale d'une première partie de carter (18) du carter de mélange (10) qui forme la section de canal (19) amont et fait saillie dans une deuxième partie de carter (22) du carter de mélange (10).
